# EUROPEAN PATENT APPLICATION

(11) **EP 4 660 837 A1**
(43) Date of publication of application: **10.12.2025**
(21) Application number: 24209228.6
(22) Date of filing: 28.10.2024
(51) Int. Cl.: G06F 16/3329, G06F 16/901

(54) **COMPUTER IMPLEMENTED METHOD FOR QUESTION ANSWERING**

(30) Priority: 07.06.2024 IN 202411044331
(71) Applicant: Fujitsu Limited, Kawasaki-shi, Kanagawa 211-8588 (JP)
(72) Inventor: PANDA, Pranoy, 560037 Bangalore (IN); AGARWAL, Ankush, 560037 Bangalore (IN); DEVAGUPTAPU, Chaitanya Naga Sri Krishna, 560037 Bangalore (IN)
(74) Representative: Haseltine Lake Kempner LLP

(57) **Abstract**

A computer-implemented method of generating an answer from an input query and input documents, comprising extracting input query entities from the input query and input document entities from the input documents, sampling a schema of in-domain queries with the input query to generate a query sampled schema, generating an entity-document graph from the input documents and input document entities, generating a hyper-relational knowledge graph by extracting, for each input query entity, a document title and relation to an input document entity of the input document entities from the input documents in the entity-document graph, sampling the hyper-relational knowledge graph with the query sampled schema to generate a query focused hyper-relational knowledge graph, predicting an answer to the input query by inputting the query focused hyper-relational knowledge graph and input query into a pretrained neural network, outputting the answer.

## Description

### Background

Computer methods for answering user questions are in high demand. Machine generated answers can be useful in numerous fields such as for medical diagnosis (symptoms, patient history, lab results, and medical literature used to diagnose a condition), legal analysis (multiple legal precedents, statutes, case facts to build an argument or understand a legal issue) and for chat-bots in business settings and retail.

Training-based methods for question answering are popular for complex 'multi-hop' question answering tasks. Multi-hop questions are, for example, questions which require reference to multiple documents/sources to generate an answer. However, a disadvantage to training methods is that they require a large amount of labelled data during training.

Large language models, LLMs, such as ChatGPT are widely used for question-answering and work in a training-free setting (no labelled data). While LLMs are effective at generating structured sentences which appear to be semantically coherent, they often 'hallucinate' facts and output incorrect information. LLMs are often trained and tested on large, unstructured text documents. Storage of the training and test data requires extensive resources. Text documents often contain important relevant information, and less relevant information which may act as a 'distractor' (therefore leading to hallucinations). Accessing the whole text document when only some relevant information is required leads to an inefficient use of computing resources.

There is a desire to improve the generation of contextually meaningful and accurate answers to input questions.

### Summary of the invention

The invention is defined in the independent claims, to which reference should now be made. Further features are set out in the dependent claims.

According to an aspect of the invention there is provided a computer-implemented method for generating an answer from an input query and input documents. The method comprises extracting input query entities from the input query and input document entities from the input documents, sampling a schema of in-domain queries with the input query to generate a query sampled schema, generating an entity document graph from the input documents and input document entities, generating a hyper-relational knowledge graph by extracting, for each input query entity, a document title and relation to an input document entity of the input document entities from the input documents in the entity-document graph, sampling the hyper-relational knowledge graph with the query sampled schema to generate a query focused hyper-relational knowledge graph, predicting an answer to the input query by inputting the query focused hyper-relational knowledge graph and input query into a pretrained neural network, and outputting the answer.

### Brief description of drawings

Reference is made, by way of example only, to the accompanying drawings in which:
**Figure 1** shows an example of an answer generating model using a method known in the art;
**Figure 2** shows another example of an answer generating model using a method known in the art;
**Figure** 3 shows yet another example of an answer generating model using a method known in the art;
**Figure 4** shows a flow chart for steps of a method for generating an answer to an input query;
**Figure 5a** shows an example architecture for generating an answer to an input query;
**Figures 5b-5f** show example graph schema used in the method for generating an answer to an input query;
**Figure 6** shows a functional block diagram for creating an in-domain schema;
**Figure 7** shows a functional block diagram for generating an answer to an input query;
**Figure 8** shows a flow chart of a method for generating an in-domain graph schema;
**Figure 9** shows a flow chart of a method for generating an answer to an input query;
**Figure 10** shows an example implementation of the question answering method;
**Figure 11** shows low level diagrams for known methods and the method disclosed herein for question answering;
**Figure 12** is a block diagram of an information apparatus, or computer device.

### Detailed description

In recent years machine learning and neural networks have significantly contributed to the improvement of machine language models. Various types of language models, such as natural language processing (NLP) and large language models (LLMs), have been developed for human-machine interactions.

There is a high demand for language models to answer complex questions with contextual and, importantly, accurate information. Complex questions may be "multi-hop" questions which require the language models to integrate information from disparate data (different sources) in a single step and use reasoning to generate an answer. Various models and training methods have been developed for question answering. However, the inventors of the method disclosed herein have identified disadvantages with the known methods.

One known model for question answering is to use a zero/few shot-training free model, such as the LLMs GPT- 3.5 and GPT-4 (Achiam et al. 2023, Gpt-4 technical report). Similarly, a zero/few-shot method, i.e., a training-free method may be used which leverages knowledge graphs for question answering and reasoning (see for example StructQA, Li et al. 2023, Leveraging Structured Information for Explainable Multi-hop Question Answering and Reasoning). The inventors identified that these models and methods generate conflicting information from unstructured training text. This can often lead to incorrect and unreliable answers. In the zero/few-shot method, the structured data generation pipeline is question independent, making it suboptimal. A common approach with these methods is to construct knowledge-graphs for question answering. However, a drawback to this approach is that the graph contains facts without context and is generally incomplete.

An alternative to the zero/few shot model and method is to use a supervised learning method which trains models with knowledge graphs and labelled data for question answering. SeqGraph (Ramesh et al. 2023, Single Sequence Prediction over Reasoning Graphs for Multi-hop QA), HGN (Fang et al. 2020, Hierarchical graph network for multi-hop question answering), DFGN (Qiu et al. 2019, Dynamically fused graph network for multi-hop reasoning) are examples of supervised techniques. However, supervised learning requires training on labelled data and procuring labelled in-domain data is expensive (with respect to time and money). The amount of available data is therefore often limited, leading to inaccurate or incomplete knowledge bases for the models. It is desirable to generate a method for multi-hop question-answering that requires reasoning over multiple documents, without labelled data from a target domain.

There is provided herein a computer-implemented method for generating an answer from an input query and input documents, comprising: extracting input query entities from the input query and input document entities from the input documents, sampling a schema of in-domain queries with the input query to generate a query sampled schema, generating an entity-document graph from the input documents and input document entities, generating a hyper-relational knowledge graph by extracting, for each input query entity, a document title and relation to an input document entity of the input document entities from the input documents in the entity-document graph, sampling the hyper-relational knowledge graph with the query sampled schema to generate a query focused hyper-relational knowledge graph, predicting an answer to the input query by inputting the query focused hyper-relational knowledge graph and input query into a pretrained neural network, and outputting the answer.

The schema of in-domain queries, the entity-document graph, hyper-relational knowledge graph and/or query focused hyper-relational knowledge graph may be stored in a database or any other suitable storage medium.

Advantageously, the method may provide an improved database management system. Data, for example the input query entities and input document entities, in each schema/graph may be stored and retrieved using data structures for efficient management of data. Each sampling step in the method may reduce or compress or prune a graph (i.e. the graph being sampled). Thus, data stored in the database relating to a sampled schema/graph may be reduced. For example, each sampling step may remove data (e.g. entities and relations) which is not relevant to the input query, thereby leading to an efficient storage of query relevant information. The efficient storage of the sampled graphs may therefore optimise the execution time of structured queries, or instructions, for accessing the data. By sampling the graphs, the resources needed, i.e. main memory and/or hard disk, for storing the graphs in reduced. Furthermore, the efficient storage of the graphs may reduce the computational resources, for example CPU resources, required for accessing the graphs.

The entity-document graph may link each input document entity with the input documents containing the input document entity. The document title and relation to the input document entity may be from the same input document.

The hyper-relational knowledge graph may be generated using a level order traversal of the entity-document graph starting from an input query entity. The level order traversal may be referred to as a breadth-first traversal.

The hyper-relational knowledge graph may be sampled with the query sampled schema by: generating query sampled schema embeddings for relations between entities in the query sampled schema, generating hyper-relational knowledge graph embeddings for the relations between the input query entities and input document entities in the hyper-relational knowledge graph, comparing the query sampled schema embeddings and hyper-relational knowledge graph embeddings, and extracting the relations and corresponding input query entities and input document entities in the hyper-relational knowledge graph which meet a similarity score to generate the query focused hyper-relational knowledge graph.

The query sampled schema embeddings and hyper-relational knowledge graph embeddings may be compared using a cosine similarity score. A hyperparameter may set the number of the relations and corresponding input query entities and input document entities to extract.

The schema of in-domain queries may be sampled with the input query to generate the query sampled schema by: extracting input query relations between input query entities from the input query, generating a relation embedding for each of the input query relations and in-domain relation embeddings for each relation in the schema of in-domain queries, computing a query sampled similarity score between each relation embedding and each in-domain relation embedding, and generating the query sampled schema by removing the relations in the schema of in-domain queries and entities corresponding to the relations in the schema of in-domain queries which do not meet a threshold of the query sampled similarity score.

The schema of in-domain queries may be generated by: loading in-domain queries, decomposing the in-domain queries into single-hop questions, generating single hop question embeddings for each single-hop question, clustering the single-hop question embeddings into clusters, using latent topic modelling to categorise each cluster into a question category, and using schema induction to generate the schema of in-domain queries from the question categories.

A single-hop question may be a question which is answered with the information in a single triplet, a triplet taking the form <subject, relation, object>, a subject being a subject of a sentence, an object being the object of the sentence and a relation being the relation between the subject and object in the sentence.

The clustering in the method may comprise k-means clustering. The single-hop question embeddings may preferably be clustered into 10 clusters.

The step of generating the schema of in-domain queries using schema induction may comprise instructing a large language model, LLM, to generate the schema of in-domain queries using entity types, the LLM generating relations for the entity types.

The pretrained neural network may a pretrained generative decoder (PGD) and/or large language model. The pretrained generative decoder may be a natural language processing model.

The schema of in-domain queries may be a graph schema.

The input query may be referred to as an input question or a question.

The input documents may be input by a user and/or may be retrieved automatically. An input document may be any text, for example structured or unstructured, and may be from a web page, or extract from a book or a pdf file, for example.

The input documents may be automatically retrieved using a document retriever.

The document title may be extracted from the input documents. The document title may be generated. For example, the document title may be generated from metadata of the document. Additionally or alternatively, the document title may be generated by inputting the document into an LLM or PGD and prompting the LLM or PGD to generate a document title based on the contents of the document.

A graph may be an abstract data type comprising edges and nodes. The entity-document graph may be a table with the format {(Doci, enti)} where Doci, is a document label or title and ent; is the extracted entity belonging to the document.

A confidence of the predicted answer may be determined, and if it is determined that information in the query focused hyper-relational knowledge graph is insufficient for answering the input query, the answer may be predicted by further inputting the entity-document graph into the pretrained neural network.

The hyper-relational knowledge graph may comprise the quadruples <document title, input query entity, relation, input document entity> for each input query entity.

There is also provided a computer program which, when run on a computer, causes the computer to carry out a method for generating an answer from an input query and input documents comprising: extracting input query entities from the input query and input document entities from the input documents, sampling a schema of in-domain queries with the input query to generate a query sampled schema, generating an entity-document graph from the input documents and input document entities, generating a hyper-relational knowledge graph by extracting, for each input query entity, a document title and relation to an input document entity of the input document entities from the input documents in the entity-document graph, sampling the hyper-relational knowledge graph with the query sampled schema to generate a query focused hyper-relational knowledge graph, predicting an answer to the input query by inputting the query focused hyper-relational knowledge graph and input query into a pretrained neural network, outputting the answer.

Further, there is provided an information processing apparatus for generating an answer from an input query and input documents comprising a memory and a processor connected to the memory, wherein the processor is configured to: extract input query entities from the input query and input document entities from the input documents, sample a schema of in-domain queries with the input query to generate a query sampled schema, generate an entity-document graph from the input documents and input document entities, generate a hyper-relational knowledge graph by extracting, for each input query entity, a document title and relation to an input document entity of the input document entities from the input documents in the entity-document graph, sample the hyper-relational knowledge graph with the query sampled schema to generate a query focused hyper-relational knowledge graph, predict an answer to the input query by inputting the query focused hyper-relational knowledge graph and input query into a pretrained neural network, output the answer.

Embodiments of another aspect include a computer program which, when executed by a computer/ computing device/ teleconference device, causes the device to execute a method of an embodiment. The computer program may be stored on a computer-readable medium. The computer-readable medium may be non-transitory.

Embodiments of another aspect include a computer program which, when executed by a companion device, causes the companion device to execute a method of an embodiment. The computer program may be stored on a computer-readable medium. The computer-readable medium may be non-transitory.

The invention may be implemented in digital electronic circuitry, or in computer hardware, firmware, software, or in combinations thereof. The invention may be implemented as a computer program or a computer program product, i.e. a computer program tangibly embodied in a non-transitory information carrier, e.g. in a machine-readable storage device or in a propagated signal, for execution by, or to control the operation of, one or more hardware modules. A computer program may be in the form of a stand-alone program, a computer program portion, or more than one computer program, and may be written in any form of programming language, including compiled or interpreted languages, and it may be deployed in any form, including as a stand-alone program or as a module, component, subroutine, or other unit suitable for use in a data processing environment.

The invention is described in terms of particular embodiments. Other embodiments are within the scope of the following claims. For example, the steps of the invention may be performed in a different order and still achieve desirable results.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

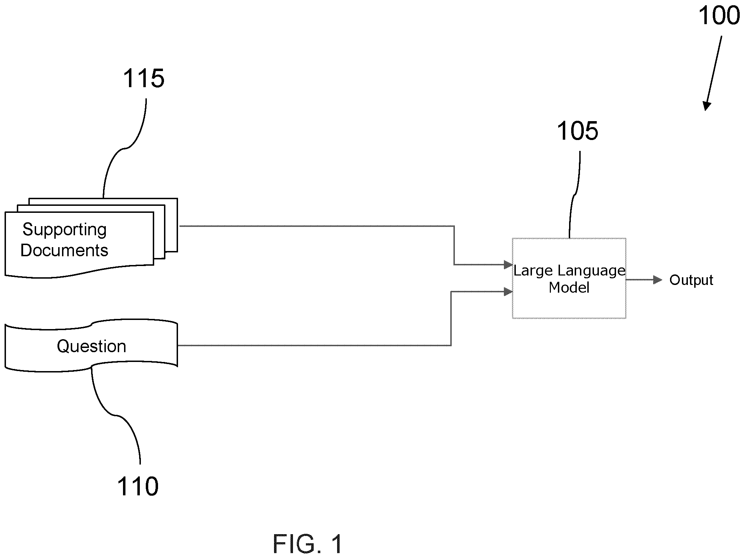

**Figure 1** is an example 100 of a known large language model 105, LLM, which may be used for question answering. The LLM is an example of a model trained using zero-few shot methods. Example LLMs which may be used in this method are GPT 3.5 and GPT4. These LLMs operate in zero-shot or few-shot setting for question answering tasks.

The LLMs may be, for example, pretrained generative decoders (PGD). That is, the LLMs may have a decoder-only architecture. The architecture may be formed of blocks or layers such as a masked, multiheaded self-attention layer and a feed forward transformation layer. The decoder may include further layers such as normalization layers. Of course, any suitable decoder may be used for question answering.

In the example shown in the figure, a question 110 may be input along with supporting documents 115 (i.e. context to the question). The LLM may output an answer to the question. An example question may be "What is the average cost of an Apple iPhone product?". The supporting documents may be:
**1 .Document-1 (Fruit):** Apples are a staple in diets worldwide, enjoyed for their crisp texture and diverse flavours. Whether sliced in salads, pressed into refreshing juice, or baked into pies, the fruit's versatility and nutritional value make it a popular choice among consumers. Apple prices vary between $3-$5/Kg.
**2. Document-2 (Company):** In the tech industry, Apple Inc. stands out as a global giant, recognized for its innovative products and sleek designs. From iPhones to MacBooks, Apple has consistently shaped the consumer electronics landscape, setting trends and pushing the boundaries of technology. Apple releases phones whose prices vary between $150-$250.
**3. Document-3 (Album):** Fiona Apple's 1996 album, titled "Tidal," made a significant impact on the music scene. With its introspective lyrics and unique musical style, the album, simply named "Apple," is a testament to the artist's creativity and ability to connect with listeners on a profound level

While the LLM may output answers which make grammatical sense and appear semantically meaningful, the inventors found that the general LLM architecture had the following problems for question answering. Firstly, the LLMs often generate incorrect and unreliable answers due to noise (distractors) in the supporting documents. The LLMs may `hallucinate' when answering questions and provide factually incorrect statements. For example, the correct answer to the question "What is the average cost of an Apple iPhone product?" is found in document-2 above. However, LLMs will often consider all the input documents (generally due to the attention mechanisms in the decoders), thereby leading to confused answers, i.e. incorrectly including context from document 1 on fruit and document 3 about an album.

Secondly, the model input is large which leads to a high cost and time due to API calls to the LLMs (PGDs). That is, to generate a meaningful answer to a query, the LLMs require all the supporting documents that are available for that query as an input.

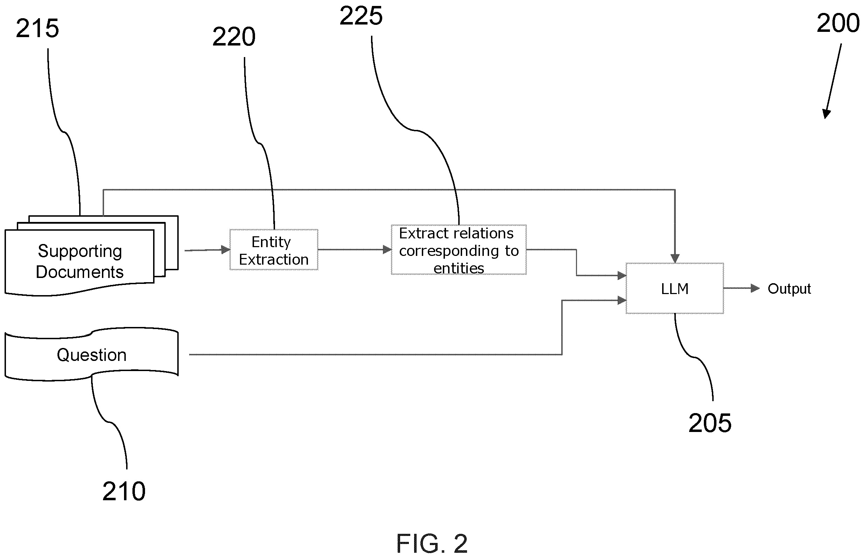

**Figure 2** is another example 200 of a known method for machine question answering. This method, see for example StructQA, Li et al. 2023, "Leveraging Structured Information for Explainable Multi-hop Question Answering and Reasoning", also uses an LLM 205 for question answering but aims to improve the answer by first preprocessing the supporting documents 215. The supporting documents are input into the model and entities from the documents are extracted in an "entity extraction" step 220. The known method used GPT-3.5 for entity extraction. Entities (which may be referred to as items or parts of a sentence, or named entities), may be the subject and/or objects of the sentences in the supporting documents. In general, an entity may be a named entity in a sentence and may refer to names of people, organizations, locations, dates, currencies, or any other predefined categories.

The StructQA model creates an entity-relation graph (which may be referred to as a knowledge graph) from the text (i.e., the supporting documents) for zero-shot and few-shot multi-hop question answering using large language models (GPT-3.5). The entity-relation graph may be generated in an "extract relation corresponding to entities" step 225. The extracted semantic graph captures the inter-document and intra-document dependencies between entities. That is, entities in each supporting document are connected by edges with entities in the same supporting document and other supporting documents.

The inventors found that the method leads to incorrect and unreliable answers due to the knowledge graph containing conflicting information. These systems answer input questions 210 without training with the simple knowledge graphs being used to change input representations to enable factual question answering.

Considering the above documents 1, 2 and 3 described in relation to Figure 1, the following information may be extracted: (Mother Love Bone, debut album, Apple), (Apple, shares, 10% high). In the above method the entity "Apple" may be recognized, and incorrect connections may be drawn between the band with a debut album and the technology company Apple. The knowledge graph therefore creates a confusion with the "Apple" entity.

The knowledge graphs, supporting documents and question are input into the LLM and an answer is generated. The inventors found that due to the incorrect connections between entities in the entity-relation graph, the LLM would output inaccurate and unreliable answers. Furthermore, as with the method above, the model input becomes very large leading to higher cost and time due to API calls to the LLMs (PGD).

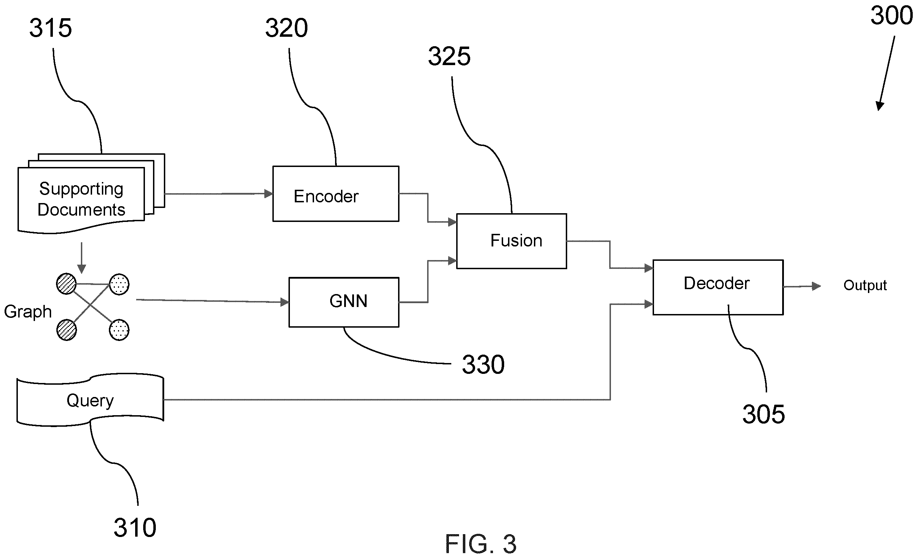

**Figure 3** is yet another example 300 of a known method for machine question answering. Similar to the second method above, this method, see SeqGraph, Ramesh et al. 2023, Single Sequence Prediction over Reasoning Graphs for Multi-hop QA, preprocesses the input supporting documents 315 before they are fed into a decoder architecture 305.

The supporting documents 315 are input into the model and extracted entities are encoded into a vector representation using an encoder 320. Further, the extracted entities are used to build a "localised entity-passage graph", linking entities in each document, as above. The representations from the Lth layer of the encoder are used to initialize the weight of a graph neural network (GNN) 330. The entity spans and titles from the GNN are added (or fused) with the encoder representation, using a fusion module 325, and passed through the remaining layers of the encoder. The output from the encoder along with an input query 310 is then input into the decoder to generate a final answer and reasoning path.

The SeqGraph method described above creates a knowledge graph and fine-tunes a pretrained language model on labeled domain data for multi-hop question answering. The inventors identified other variations of this method such as HGN (Fang et al. 2020, Hierarchical Graph Network for Multi-hop Question Answering) and DFGN (Qiu et al. 2019, Dynamically Fused Graph Network for Multi-hop Reasoning) which use a similar pipeline with a graph being used for training. SeqGraph uses an entity-passage title graph. HGN uses a a hierarchical graph with nodes representing questions, paragraphs, sentences, and entities. DFGN uses an entity-entity graph where edges represent co-occurrence. The inventors identified a disadvantage with these known methods was that they require labelled training data which is expensive to curate.

The above known methods each fail to generate reliable and accurate answers to input questions. Methods 1 and 2 generate conflicting information from the unstructured text leading to incorrect and unreliable answers. In method 2, the structured data generation pipeline is query independent making it suboptimal. Method 3 (and its variants) requires training on labelled data. Procuring labelled in-domain data is expensive (with respect to time and money).

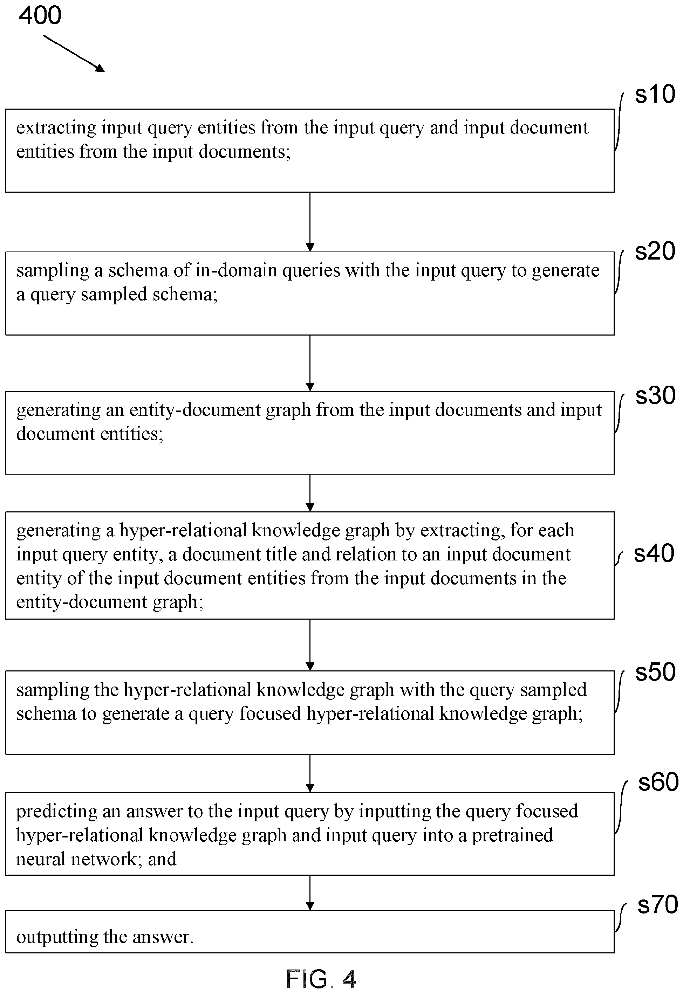

**Figure 4** is a flow chart of a method 400 for question answering disclosed herein. The method may be a computer implemented method of generating an answer from an input query and input documents.

In extracting step s10 input query entities may be extracted from the input query and input document entities may be extracted from the input documents. The input query is, for example, a question input by a user. The input documents may be supporting documents which are input along with (or separately from) the question. The input documents may be input by the user and/or may be retrieved automatically. An input document may be any text, for example structured or unstructured, and may be from a web page, or extract from a book or a pdf file, for example.

An entity (or part or item in a sentence) may be, for example, a subject and/or object of a sentence. In the sentence "apple is a fruit" the entities are "apple" (the subject of the sentence) and "fruit" (the object of the sentence). In this example "is a" describes the relation (or relationship) between the subject and the object. The inventors used an LLM to extract the entities. In particular, the inventors used GPT-3.5 to extract the entities. Of course, the entities may be extracted using any suitable entity extractor. For example any named entity extraction model could be used to extract the entities (see for example allennlp (https://paperswithcode.com/model/elmo-based-named-entity-recognition) or BERT or RoBERTa. Generally, encoder-based models are used for natural language recognition and entity extraction.

In a sampling step s20, a schema of in-domain queries may be sampled with the input query to generate a query sampled schema. An in-domain query refers to questions from the same distribution as that of the expected test distribution. For example, if the input queries are expected to relate to Wikipedia documents at, for example, a test time, then the in-domain questions would be set to be a similar nature. Similarly, if the method is used to answer questions in a financial setting, the in-domain questions would be similar in nature. The schema of in-domain queries and query sampled schema may be graphs (or graph schemas).

An in-domain schema may be generated using clustering and latent topic modelling techniques. For example, the inventors used a k-means clustering and latent topic modelling with an LLM to cluster similar question types together and determine latent topics of questions.

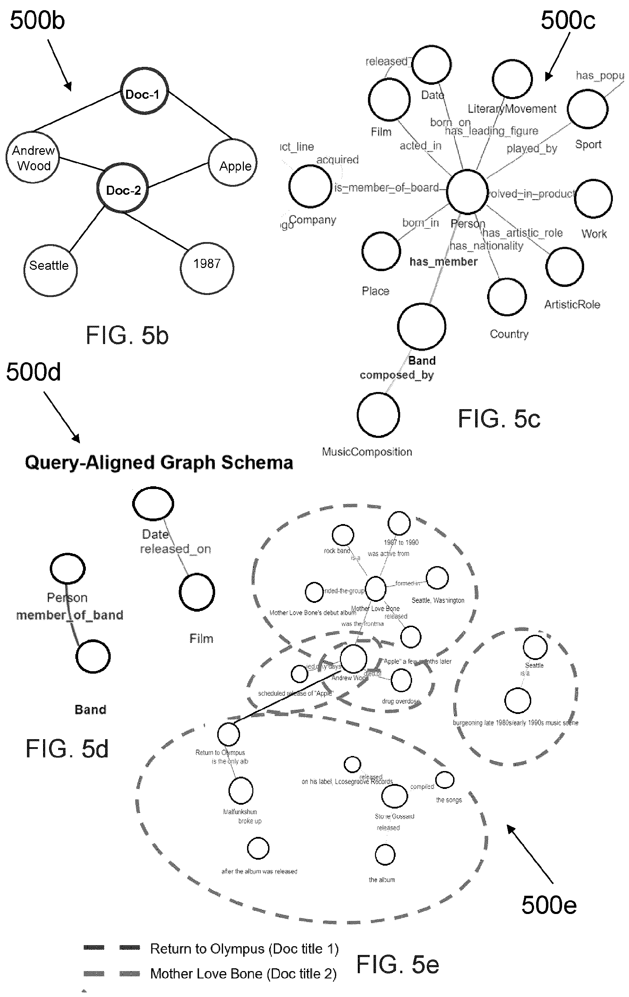

As an example, in-domain questions may be clustered into k clusters with k centroids. The inventors took the centroid and 5 nearest questions to the centroid for each cluster and used these questions to prompt an LLM to recover important information in each cluster. A cluster could be, "who played on this team?, "when was a player taken on this team?, when did that player leave this team?", the LLM may be configured to recognize a latent intent of the questions and output a latent intent. In other words, the latent intent of the question may be an underlying theme of the question. In this example the questions relate to a sport. Therefore, the latent intent identified from the questions may be "sport". That is, the in-domain schema may classify question clusters into domains or topics or fields such as names, objects, places, and subjects. For example, if an in-domain question asked, "which football team does Messi play for", the latent intent of the question may be extracted as "football". A detailed explanation of the in-domain graph schema is provided in relation to Figure 5c below.

The input query may be sampled with the schema of in-domain queries to generate the query sampled schema by first extracting input query relations between input query entities from the input query. For example, in the above question "which football team does Messi play for", the entities may be extracted as "Messi" and "football" and the relation may be extracted as "play (for)". Similarity, relations for entities (or entity types) may be extracted from the schema of in-domain queries.

Embedding(s) for a relation or relations in the input query and embeddings for the relations between entity types in the in-domain schema may be generated and then compared. For example, the relations in the input query may be relations, or relationships, or predicates, between a subject entity and object entity in the query (i.e., a relation and its corresponding entities). The relations (or relation entities) in the in-domain graph schema may be relations between nodes (i.e. object entities and subject entities). The relation embeddings may be compared by computing a cosine similarity score. The samples in the in-domain schema with scores higher than a threshold score may be extracted as the query sampled schema. That is, the query sampled schema may be generated by removing the relations in the schema of in-domain queries and entities corresponding to the relations in the schema of in-domain queries which do not meet a threshold of the similarity score. The threshold may be referred to as a query sampled threshold. The similarity score may be referred to as a query sampled similarity score.

In a generating step s30 an entity-document graph may be generated from the input documents and input document entities. That is, the entity-document graph may be formed of two node types - documents and entities. Each document node may comprise a label (i.e. Doc1, Doc 2), and/or the name (or title) extracted from each input document. The name may be extracted using an entity extraction module (such as an LLM as described above). The entity nodes may comprise each entity extracted from each input document. The nodes of the entity-document graph may be connected with edges between documents and entities, forming a bipartite graph which captures the connections between entities and the documents they appear in.

Although an entity-document graph has been described above with nodes and edges, the representation of the entities and documents may take any suitable form. That is, while a description of a graph is provided, the skilled person would understand a graph as an abstract data type, which is not necessarily visualised as a graph with nodes and edges. For example, the graph may be a table with the format {(Docᵢ, enti)} where Doci, is the document label or title and ent; is the extracted entity belonging to the document.

In a further generating step s40 a hyper-relational knowledge graph may be generated by extracting, for each input query entity, a document title and relation to an input document entity from documents in the entity-document graph. As described above, the entity-document graph may have two nodes (or entries in a table). A hyper-relation knowledge graph may have a quadruple format (source document title, subject entity, relation, object entity), with entries in the quadruple being in any order. Starting with the entities present in the input question (i.e., the input entities), the entity-document graph may be traversed in a level-order manner. With respect to a given input entity e, for every document node that is encountered in the entity-document graph, a hyper-relational knowledge quadruple may be extracted. That is, for each input entity, quadruples from the input documents may be extracted. The quadruples may be extracted using, for example, an LLM or any other suitable natural language processing model.

The extracted quadruples may then be filtered to find quadruples with the input entity as either the subject entity or object entity. The counterpart entities of the input query in the traversal is then visited and the process is continued. That is, the counterpart entity in the extracted quadruple is then visited and the process is continued. The collection of all the filtered hyper-relational knowledge quadruples obtained in this process are referred to as the hyperrational knowledge graph (and if presented in a different format then more generally as a hyper-relational knowledge schema).

In a sampling step s50 the hyper-relational knowledge graph may be sampled with the query sampled schema to generate a query focused hyper-relational knowledge graph. The hyper-relational knowledge graph may be sampled using a sampler. The sampler may 'prune' the hyper-relational knowledge graph to retain query (input question) relevant information. That is, the sampler rejects information that is not relevant to the input query.

The hyper-relational knowledge graph may be input into the sampler as the quadruples described above, (source document title, subject entity, relation, object entity). The sampling (or pruning) process may begin by computing embeddings for the relations in both the hyper-relational knowledge graph and the query sampled schema. The embeddings may be computed using the "text-embedding-ada-002" embedding model from Openai (available at https://platform.openai.com/docs/guides/embeddings). Of course, other embedding modules such as "instructor-xl" text embedding may be used (Su, H., Shi, W., Kasai, J., Wang, Y., Hu, Y., Ostendorf, M., Yih, W.T., Smith, N.A., Zettlemoyer, L. and Yu, T., 2022. One embedder, any task: Instruction-finetuned text embeddings. arXiv preprint arXiv:2212.09741). A similarity score may then be computed between the relations in the hyper-relational knowledge quadruple and the query sampled schema. The inventors used the cosine similarity score to determine a similarity between embeddings but of course any suitable similarity measure may be used. For example, a Euclidian distance or dot product score may be used instead. The entity types (i.e. the topics or classes in which the subject and/or object entity may be classified) corresponding to the relation embeddings between the hyper-relational knowledge quadruple and the query sampled schema which meet a similarity score threshold may then be compared using, for example, a similarity score. The "p" quadruples, with "p" being a hyper-parameter, with the highest similarity scores may be selected to form the query focused hyper-relational knowledge graph. The inventors selected "p" to be 50. However, the hyperparameter may be chosen based on the downstream application.

In a predicting step s60 an answer to the input query may be predicted by inputting the query sampled hyper-relational knowledge graph and input query into a pretrained neural network. The pretrained neural network may be, for example, a large language model or pretrained generative decoder. The large language model may be a type of pretrained generative decoder (PGD). That is, the LLM may be formed of a decoder only architecture. Any suitable LLM or PGD may be used. The inventors found the method was effective with GPT 3.5 and GPT 4.

In an outputting step s70 the answer generated by the pretrained neural network may be output to the user. For example, the answer may be output to the user through a graphical user interface, GUI.

Thus, the method provided herein may be used for multi-hop question-answering, which requires reasoning over multiple documents, without labelled data from a target domain.

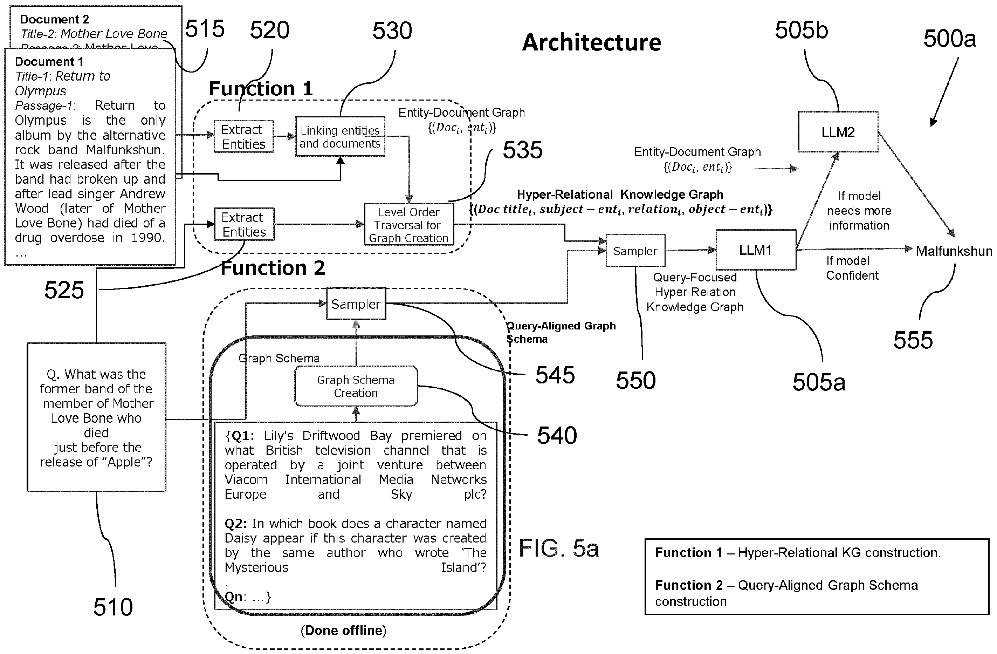

**Figure 5a** is a block diagram of an architecture 500a for implementing the method disclosed herein. As described above, large language models 505a, 505b may be used to generate an answer to an input query 510 using input documents 515. The input query 510 and input documents 515 are pre-processed before being input into the LLM (i.e. LLM1 505a in the Figure). The LLMs 505a, 505b may be any suitable LLMs such as any pretrained generative decoder suitable for question answering tasks.

The figure shows an example input question "Q. What was the former band of the member of Mother Love Bone who died just before the release of "Apple"?". The question may be input along with unstructured text (e.g. input documents). In this example the unstructured text is:

### Document 1

### Title-1: Return to Olympus

*Passage-1:* Return to Olympus is the only album by the alternative rock band Malfunkshun. It was released after the band had broken up and after lead singer Andrew Wood (later of Mother Love Bone) had died of a drug overdose in 1990...

### Document 2

### Title-2: Mother Love Bone

*Passage-2:* Mother Love Bone was an American rock band that formed in Seattle, Washington in 1987. The band was active from 1987 to 1990. Frontman Andrew Wood's personality and compositions ...

The architecture shows a Function 1 and a Function 2. Function 1 includes "extract entities" modules 520, 525. The extract entities modules extract entities from the input query and input documents. While two modules are shown, the extract entities module may of course be a single module. Furthermore, Function 1 includes a "linking entities and documents" module 530. The linking entities and document module 530 may generate the entity-document graph described in relation to Figure 4 above. That is, the input unstructured text (documents) may be used to create an entity-document graph (or entity document schema). The schema may be structured as a table with the format: {(Docᵢ, entᵢ)...}.

Function 1 also includes a "Level Order Traversal for Graph Creation" module 535. This module may be used to generate the hyper-relational knowledge graph by extracting, for each input query entity, a document title and relation to an input document entity from documents in the entity-document graph. For example, the hyper-relational knowledge graph may be generated using a level order traversal. That is, considering the entity-document graph (or entity-document tree), the entity-document graph is traversed such that all nodes present in the same level are traversed completely before traversing the next level. With respect to a given input entity e, for every document node that is encountered in the entity-document tree, a hyper-relational knowledge quadruple is extracted from the document containing the entity. That is, for each input entity, quadruples from the input documents in which the input entity is present are extracted. The quadruples may be extracted using, for example, an LLM or any other suitable natural language processing model. While a level order traversal (which may also be referred to as breadth-first traversal) is described here, any suitable traversal may be used.

The hyper-relational knowledge graph may take the form: {(***Doc title_i***), (***subject-ent*_*i***), (***relation_i***), (***object-ent_i***)}. The hyper-relational knowledge graph effectively addresses conflicting information by removing it from the graph. For example, the above quadruple identifies a subject, relation, object triple along with the document title for the document in which the triple is extracted from. While conventional knowledge graphs may erroneously link entities with the same name (e.g. Apple in a previous example given above), such a problem does not arise in the hyper-relational knowledge graph as entities are distinguished by their document titles.

The quadruples may be stored in a database and may be accessed using, for example a database management system. In this example the database management system may be a part of the "Level Order Traversal for Graph Creation" module and/or a sampler 545, 550 (described below). The data stored in the input documents may be compressed as it is stored in quadruples, thereby reducing the storage space required for storing information in the input documents. Furthermore, by compressing, or reducing, the data in the input documents, the query response time for accessing the stored data is reduced and fewer CPU resources are required for accessing the data.

As shown above, each hyper-relational quadruple may be indexed (shown with the index i above). Indexing each entry in the quadruple may facilitate efficient access of information from the quadruple. For example, in the sampling step s50 described in relation to Figure 4 above, the hyper-relational knowledge graph may be sampled with the query sampled schema to generate a query focused hyper-relational knowledge graph. For the sampling step, a relation index, i.e. "relation_i" may be efficiently extracted from the hyper-relational quadruple and may similarly be extracted from a database storing entity-types and relations for the query sampled schema.

Function 2 in the Figure includes a sampler, which may be referred to the query sampler 545 (or schema sampler), and a graph schema creation module 540. While referred to as a "graph schema creation module" the skilled person would understand that a "visual graph" is not necessarily the output of the module, and a table or any other suitable format may be output instead. Thus, generally the module may be referred to as a "query-focused schema creation module". This module may create a query-focused schema (which may be referred to as the schema of in-domain questions or in-domain schema) from input "in-domain" questions. This process may be performed offline. That is, the query-focused graph (schema) may be generated, or created, in advance of a user inputting a query.

In this example, the input question relates to music. The example in-domain questions are:
{**Q1:** Lily's Driftwood Bay premiered on what British television channel that is operated by a joint venture between Viacom International Media Networks Europe and Sky plc?
**Q2:** In which book does a character named Daisy appear if this character was created by the same author who wrote 'The Mysterious Island'?
**Qn:** ...}

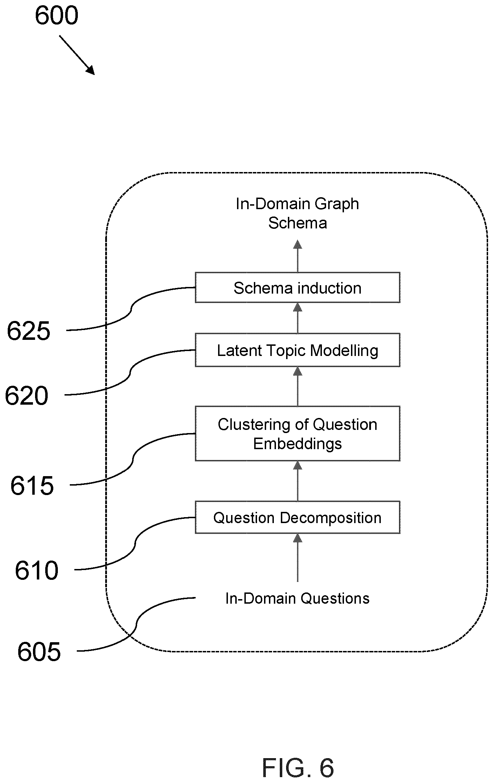

The in-domain questions broadly relate to the "arts and literature" domain. More details of the query-focused schema creation module are provided in relation to Figure 6 below.

The query sampler 545 may be used to sample the query-focused schema with the input query to generate a query sampled schema. The query-focused schema may be sampled by first converting the input query and query-focused schema into embedding representations. For example, relations in the input query and relations in the query focused schema may be converted to embeddings. A similarity score, such as a cosine similarity score may be used to determine the similarity between the relation embeddings. Embeddings may be considered similar if they are above a threshold. For example, the inventors used the hyperparameter 0.85 as the threshold for the cosine similarity score. Of course, the threshold number may be varied, depending on, for example, downstream uses. The embeddings may be generated using text-embedding-ada-002" or "instructor-xl" as described above, or any other suitable embedding model. The relations may be extracted from the query and the in-domain schema using a relation extraction module. For example, an LLM may be used to extract the relations. The in-domain schema may be sampled to generate the query sampled schema by removing the relations, and corresponding entities (that is the subject and object entities linked by the relation), which do not exceed the similarity score threshold.

The architecture may also include a further sampler, which may be referred to as a hyper-relational sampler 550. The hyper-relational sampler 550 may sample the hyper-relational knowledge graph with the query sampled schema to generate a query focused hyper-relational knowledge graph. The sampler may be a heuristic algorithm configured to retain query (input question) relevant information in the hyper-relational knowledge graph. The sampling process is described in relation to Figure 4 above. Embeddings may be calculated for the relations in each quadruple of the hyper-relational knowledge graph and the query sampled schema. A similarity score may then be computed for all those relations whose entities in the hyper-relational knowledge quadruple match with that in the query sampled schema. The inventors used the cosine similarity score to determine similarity between embeddings but of course any suitable similarity measure may be used. The "p" quadruples, with "p" being a hyper-parameter, with the highest similarity scores between relation embeddings may be selected to form the query focused hyper-relational knowledge graph.

The query focused hyper-relational knowledge graph and input query may be input into an LLM 505a. The LLM may predict an answer to the input query. The query focused hyper-relational knowledge graph and input query may be input into the LLM as a text prompt. For example, the text prompt may instruct the LLM to use the hyper-relational knowledge graph to answer the input query. Inputting the hyper-relational knowledge graph and input query may be part of a retrieval-augmented generation (RAG) technique. That is, external data (i.e., query focused hyper-relational knowledge graph) is used to provide query focused information to the LLM for answering the question. An LLM may be one example of a natural language processing (NLP) unit which may generate an answer to the input query using an external knowledge base (e.g., query focused hyper-relational knowledge graph). Of course, any suitable NLP model may be used. For example, a decoder-only architecture or pretrained generative decoder, may be used for question answering. The inventors used the GPT-3.5 and GPT-4 modules for the LLM. By leveraging the zero-shot capabilities of LLMs, the dependency on labelled training date from the target domain is removed.

The LLM may perform a confidence check on the predicted answer. The LLM/ PGD/NLP may be prompted to determine if it is confident with the answer. That is, the model may be asked if the information given as input is sufficient to answer the question or not. The model may function as a binary decision making scheme and generate a binary decision as either sufficient or insufficient.

If the model is not confident with the predicted answer, further information may be input into the LLM. If any information is missing to answer the user query from the pruned (sampled) hyper-relational KG, that missing information may be fetched or acquired from the entity-document graph. That is, a subset of the entity-document graph may be additionally input into the LLM along with the input question and query focused hyper-relational knowledge graph.

The LLM may output the answer 555 in a text format. For example, for the input question "Q. What was the former band of the member of Mother Love Bone who died just before the release of "Apple"?" the LLM has output the correct answer "Malfunkshun". Furthermore, the LLM may be configured to output a reasoning logic flow for arriving at the answer. For example, given the query focused hyper-relational graph and input question, the LLM may be prompted to output the logic flow and may output the following:

### Relevant Facts from Model Perspective:

- Andrew Wood later joined Mother Love Bone (Fact extracted from document titled "Return to Olympus")
- Andrew Wood was the frontman of Mother Love Bone (Fact extracted from document titled "Mother Love Bone")
- Andrew Wood died only days before scheduled release of debut album (Fact extracted from document titled "Mother Love Bone")
- Return to Olympus is the only album by Malfunkshun (Fact extracted from document titled "Return to Olympus").

Thus, as described above, given an inference query and related documents, the architecture may sample a query-focused graph schema to curate a query-aligned schema. An entity-document graph may be created from unstructured documents (i.e. docs or paragraphs with named entities in them connected by edges). Then, using the query-aligned schema and entity-doc graph a schema-focused hyper-relational graph may be created and then pruned for query relevant information. Finally, this graph may be fed along with the query to the pre-trained generative decoder to get the final output (answer).

The method disclosed herein captures contextual and relevant information with query-focused schema and hyper-relational knowledge graph for multi-hop question answering. Conflicting information and the need of training is eliminated by curating a hyper-relational knowledge graph containing all the relevant information with respect to the given question. The accuracy of multi-hop question answering is therefore improved.

**Figures 5b-5e** show example graph schema which may be generated by the method disclosed herein.

**Figure 5b** shows an example knowledge graph 500b, or entity-document graph, which may be generated from the input documents and input documents entities. As shown in the figure, the graph may have nodes comprising a document number and entities, and edges linking each entity with the documents they are found in. For example, "Andrew wood" is present in both document 1 and document 2, hence there are edges from the "Andrew Wood" node to the Doc1 node and Doc2 node. Further, "Seattle" is only described in Doc-2, hence there is only an edge from the "Seattle" node to the Doc-2 node.

**Figure 5c** shows an example in-domain graph schema 500c. The in-domain graph schema (which may be referred to as a schema of in-domain queries) may be created using the Graph schema creation module described in Figure 5a. In-domain questions may be input, and the graph schema may be generated using latent topic modelling to capture the latent intent of the in-domain questions. As shown in the Figure, nodes may relate to entity types and edges may describe relations between entity types. The in-domain graph schema may capture general entity types or topics or categories. For example, the graph schema includes nodes such as "person", "country" and "company". The edges in the graph capture relations, or predicates, between the nodes. Example relations are "born_in" and "is_memeber_of_board".

The in-domain schema is shown as a graph in this example but of course may be presented in different forms. For example, each entity and relation may be presented as an entity-relation triplet in the form <subject entity, relation, object entity>. An example triplet extracted from the example graph may be <person, born_in, country>.

**Figure 5d** is an example query sampled schema 500d (which may otherwise be referred to as a query-aligned graph schema). The query sampled schema may be generated by sampling the in-domain graph schema with the input query. In this example, given the input question "What was the former band of the member of Mother Love Bone who died just before the release of "Apple"?", the query sampled schema contains the entity-relation triples <person, member_of_band, band> and <film, released_on, date>.

**Figure 5e** is an example of a hyper-relational knowledge graph 500e. As described above in Figure 4, the hyper-relational knowledge graph may be generated by extracting a quadruple from the input documents for each entity in the input query. As shown in the figure, a triple may be formed with entities as nodes and relations as edges. The quadruple is formed by marking which triplets belong to each of the input documents.

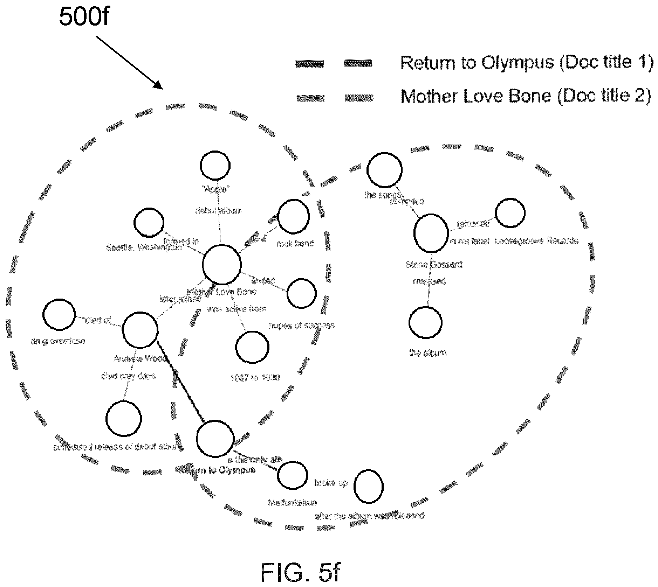

**Figure 5f** in an example of a query focused hyper-relational knowledge graph 500f. The query focused hyper-relational knowledge graph may be generated by sampling the hyper-relational knowledge graph with the query sampled schema. Embeddings may be calculated for each relation in the query-aligned graph schema 500d and for each relation in the hyper-relational knowledge graph. For example, an embedding may be calculated for the relations "member_of_band" and "released_on" in the query-aligned graph schema. Similarly, embeddings may be calculated for each relation in the hyper-relational knowledge graph, for example "was_the_front_man_of", "formed in" and "released". The relation embedding between the relation in the query-aligned graph and hyper-relational knowledge graph may be compared. For relations which are considered similar, the entities (or entity embeddings) corresponding to the relations in the hyper-relational knowledge graph and the entity types (or entity type embeddings) corresponding to the relations in the query aligned schema may also be compared for similarity.

The relation embeddings "member_of_band" and "was_the_front_man_of" in the examples above may be compared, using for example a similarity score. If the relations embeddings are considered similar, then the entity and entity types may be compared. In this example, the relation "member of band" is linked with the subject entity "person" and object entity "band" and the relation "front_man_of" has the corresponding entities "Andrew wood" and "Mother Love Bone". Each of the entities (or entity embeddings) may be compared using a similarity score. In this example "Andrew wood" may classified as a person and/or Mother Love bone may be classified as a Band. In this example both the subject entity and object entity match the entity types (i.e. person and band), however in some examples only the subject entity or object entity may correspond with the entity type. The query focused hyper-relation knowledge graph may be constructed with subject entity and/or object entities (and their respective relation) which have a similarity score with the entity type in the query aligned schema which exceeds a threshold.

In contrast, there is no mention of a place in the query aligned schema. Thus, the quadruple <Mother love bone, Seattle, is a, burgeoning late 1980s/early 1990s music scene> has been removed from the query aligned hyper-relational schema.

Thus, the query focused hyper-relational knowledge graph may be generated by sampling the hyper-relational knowledge graph with the query sampled schema by extracting quadruples from the hyper-relational knowledge graph which meet the above requirements. The number of quadruples in the query focused hyper-relations knowledge graph may be predefined. Thus, only relations with the highest similarity scores may be selected when comparing relations embeddings.

**Figure 6** shows a functional block diagram 600 for creating an in-domain schema. The architecture shown in the figure may be comprised in, for example the graph schema creation module 540 described in relation to Figure 5a.

The architecture may comprise a question decomposition module 610, a clustering module 615, a latent topic modelling module 620 and schema induction module 625. The schema induction module 625 may be comprised in the latent topic modelling module 620 or may be a separate module. Generating the in-domain schema may be performed in an "offline" process. That is, the schema may be generated before a user inputs a query into the model.

The questions decomposition module (or question decomposer) 610 may receive one or more in-domain questions 605. In-domain questions 605 may be questions relating to a specific field and/or topic. Examples of domains may be finance, IT, Human resources, procurement, customer services, and other industries. More generally a domain may define an industry or topic or field or area. A domain may contain words belonging to a specific lexicon. Lexical specificity and contextual nuances in a domain may arise due to subtle variations in meaning and interpretation of words and terminologies used in certain circumstances or environments. The inventors used 10k questions from the Wikipedia-based HotpotQA training dataset (Yang, Z., Qi, P., Zhang, S., Bengio, Y., Cohen, W.W., Salakhutdinov, R. and Manning, C.D., 2018. HotpotQA: A dataset for diverse, explainable multi-hop question answering. arXiv preprint arXiv: 1809.09600)for in-domain questions.

The question decomposer 610 may receive complex "multi-hop" questions. These may be questions which require multiple steps, or hops, to answer. A multi-hop question may require reference to multiple documents to answer. An example of a multi-hop question is "What was the former band of the member of Mother Love Bone who died just before the release of "Apple"?". The question decomposer 610 may decompose the multi-hop question into single hop questions. Single hop questions may be questions with a single "interrogative word" or single "question word". A single-hop question may require only one reasoning step to arrive at an answer. For example, the question decomposer 610 may decompose the above question into the following single hop questions "What was the former band of a member of Mother Love Bone", "which band member of Mother Love Bone died?", "When was "Apple" released?". The question decomposer 610 may be a pretrained neural network. For example, the question decomposer 610 may be an LLM which takes the multi-hop question as an input and outputs the decomposed questions. The LLM may take as a prompt the multi-hop question and may be instructed to decompose the multi-hop question into single hop questions. The LLM may additionally take example questions decompositions as an input as a type of in-context learning.

The decomposed, single hop questions may be converted to embeddings or vector representations. The embeddings may be clustered using, for example, a k-means clustering algorithm. The k-value in the clustering may be set to an arbitrary number. The inventors experimented with multiple cluster sizes and found setting k as 10 was best suited for the use case. Each cluster may be input into the latent topic modelling module to extract question categories, or topics, of the single hop questions. The inventors input the centroid of each cluster and the 5 closest questions to the centroid but of course any number of questions in a cluster may be used. A latent intent may be extracted from each cluster. The latent intent may be extracted using an LLM, for example GPT-4 or GPT-3.5. The LLM may be prompted to extract a latent intent for each cluster. That is, the LLM may be prompted to discern latent topics, focusing on entity types (rather than entities themselves, where entities may be categorised into entity types) and relations.

The latent intent may of course be extracted using other latent topic modelling techniques. For example, Latent Dirichlet allocation (LDA) may be used for the topic modelling.

Entity types may refer to categories of named entities, such as people, places, organizations, dates, and objects. The following list are examples of entity types known in the academic community:
1. PERSON: People, including names, titles, and aliases.
2. NORP: Groups of people, such as companies, organizations, and nationalities.
3. FAC: Buildings, airports, highways, bridges, etc.
4. ORG: Companies, institutions, and organizations.
5. GPE: Countries, cities, states, and other geographic locations.
6. LOC: Non-geographic locations, such as mountains, bodies of water, and landscapes.
7. PRODUCT: Objects, vehicles, and devices.
8. EVENT: Named events, such as conferences, sports events, and natural disasters.
9. WORK_OF_ART: Titles of books, movies, songs, and other creative works.
10. LANGUAGE: Any named language.
11. DATE: Dates, including birthdays, anniversaries, and other specific dates.
12. TIME: Times of day, including clock times and durations.
13. PERCENT: Percentages, including percentages and ratios.
14. MONEY: Monetary amounts, including currencies and exchange rates.
15. QUANTITY: Measurements, including weights, lengths, and speeds.
16. ORDINAL: Ordinal numbers, including "first", "second", etc.
17. CARDINAL: Cardinal numbers, including "one", "two", etc.

Question categories may be more abstract categories such as "Methodology-based", "Comparison-based", "Description-based" etc. In some cases, question categories may be a subset of the entity types. An LLM may be prompted to extract/decide the question categories from the clustered questions.

An in-domain graph schema may be generated using the schema induction module 625. The schema induction module 625 may be implemented using an LLM, as above. The schema induction module 625 may take as an input a prompt to generate a graph schema based on the question categories described above. The prompt may further include instructions as to how the schema should be constructed with, for example, nodes representing entity types (or categories) and edges representing a relationship between them. Further, example questions and example schema used for answering the questions may be input to the schema induction module.

An example of a prompt to generate a graph schema is:
"The broad question categories are:
{all extracted question categories}

### Instructions:

(i) Create a set of relations for a knowledge graph that clearly and unambiguously express the relationships between entities ensuring they are reusable, standardized, and semantically meaningful.
(ii) Generate a list of distinct, relevant, and comprehensive entities for a knowledge graph about wikipedia text, ensuring they are specific, meaningful, and cover all aspects of the domain.
(iii) After extracting the entities and relation types, for the graph schema of the knowledge graph return the all the triplets "entity type - Relation Type - Entity Type" in the output as a list
(iv) Important: ensure that the triplets generated forms a connected graph
(v) Important: - nothing else other than the list of triplets should be returned.

Format for the list:
[("Entity type", "relation", "Entity type"),
("Entity type", "relation", "Entity type"),...]"

Thus, the above process may use latent topic modelling and clustering of in-domain questions to create a schema of in-domain queries. The schema of in-domain queries may be sampled with an input query to generate a query-focused schema. The query-focused schema may contain mapped relations of the input query (question) to the full in-domain schema (user's question is mapped to relevant portions of the graph schema), streamlining the retrieval of specific information to efficiently handle user's queries or questions.

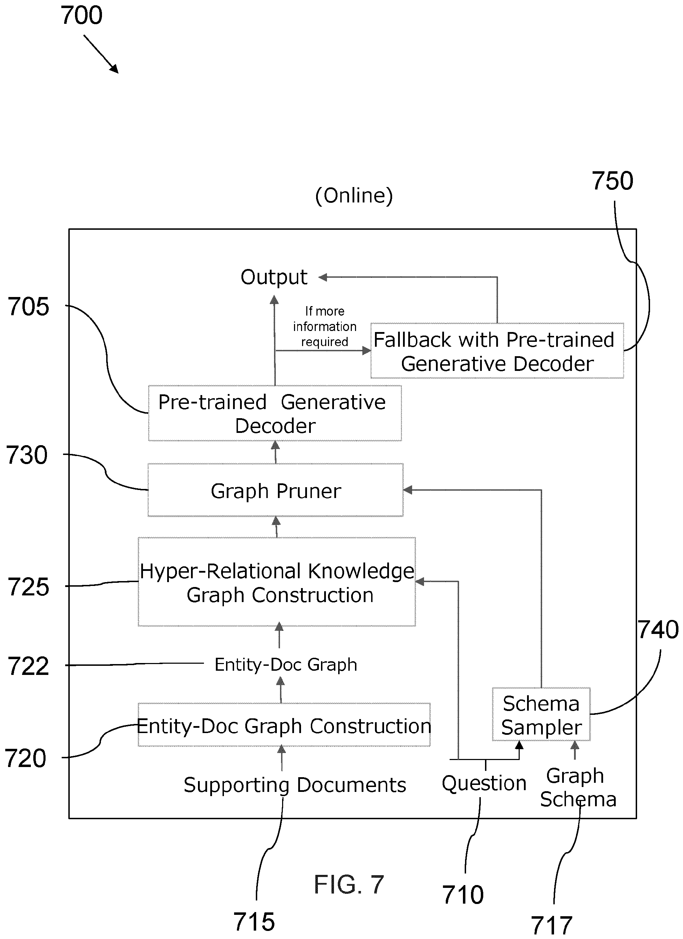

**Figure 7** shows a functional block diagram 700 for implementing the method disclosed herein. The question answering method may be an "online" process. That is, an unknown question may be received by the model and an answer may be generated live using a pretrained neural network. A front-end architecture may allow a user to input a question and may be run on, for example a mobile phone. A back-end architecture may process the input to generate an answer. The back-end architecture may be implemented in, for example, a server. The mobile phone and server may communicate via a wireless or wired communication protocol.

The architecture shown in the figure comprises a Pre-trained Generative Decoder 705, an Entity-Doc Graph Construction module 720, a Hyper-Relational Knowledge Graph Construction module 725, a Graph Pruner 730, and a Schema Sampler 740.

In this example, an input question 710, supporting documents 715 and Graph schema 717 (i.e. in-domain graph schema) is received as an input. The entity-Doc Graph Construction module 720 may link named entities to their respective documents, forming a network with two kinds of nodes - entities and document labels, with edges between the nodes representing the presence of an entity in a document. The entity doc graph may be, for example a bipartite graph or may be represented in a tabulated form as a schema.

The Hyper-Relational Knowledge Graph Construction module 725 may perform a level order traversal on the entity-doc graph, starting from the entities present in the question and traversing each level of the graph to form the Hyper-Relational Knowledge Graph (or Hyper-relational knowledge graph schema).

The Schema Sampler 740 (referred to as a query sampler above, see for example Figure 5) may sample the Graph Schema with relations in the input question.

The Graph Pruner module 730 may "prune" or sample the Hyper-Relational knowledge graph based on the sampled schema by matching the relations present in both schemas. The pruned Hyper-Relational knowledge graph may be referred to as a query focused Hyper-Relational knowledge graph.

The Pre-trained Generative Decoder 705 may be, for example a large language model for generating, or predicting, an answer based on the question and the provided content. In this example the "provided content" is the query focused Hyper-Relational knowledge graph.

As described in relation to Figure 5, the architecture may further include a Fallback with Pre-trained Generative Decoder 750. If the Pre-trained Generative Decoder is not confident in the output answer, additional information from the entity-doc graph may be input into the Pre-trained Generative Decoder to generate an answer.

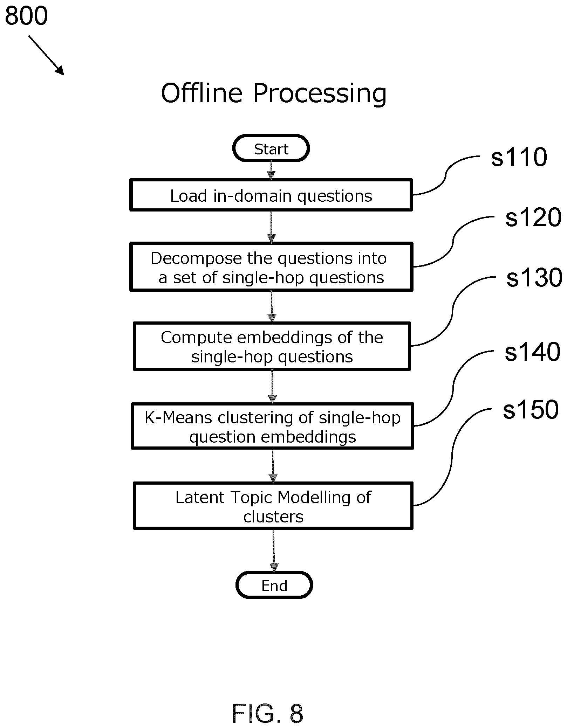

**Figure 8** is a flow chart of a method 800 for generating an in-domain graph schema. The method may be performed by the architecture described in relation to Figure 6. Generating the in-domain schema may be performed offline. The generated in-domain schema may be stored, for example in a non-transitory memory, ready for retrieval when an input query is received. The in-domain schema may be constructed before an input query is received.

In a loading step s110, in-domain questions may be loaded. The in-domain questions may be retrieved from, for example, a database. The inventors used 10k questions from the HotpotQA database. The questions in the in-domain questions may all relate to the same domain and/or field and/or topic. The questions may be multi-hop questions. A multi-hop question may be a question which requires multiple sources (documents) and/or multi-step reasoning to arrive at an answer. A multi-hop question (which may otherwise be referred to as a multidimensional question) may require more than one <subject, relation, object> triple in its answer (with the relation describing only the relation between the subject and object entities in the triple. That is, the object, relation, subject triple would only relate to one object, one subject and a relation between the object and subject).

In a decomposition step s120, the in-domain questions may be decomposed (or broken) into simple, single hop questions (if they are not already single-hop questions). The question decomposition may be performed by a pretrained neural network. For example, an LLM or PGD may receive the in-domain question along with an instruction to construct single hop questions from the in-domain question. The output from the neural network may be one or more single-hop questions generated from the in-domain question.

A single hop question may be a question which requires one <subject, relation, object> triple to be answered. A multi-hop question, requiring more than one <subject, relation, object> triple to be answered may be decomposed by constructing questions which require only one of the <subject, relation, object> triples to be answered. An example multi-hop question may be "which team does the Argentinian footballer who wears a shirt with the number 10 play for". The answer to the multi-hop question requires the answer triplets "<Messi, wears, number 10 shirt>" and "<Messi, plays for, Inter Miami CF>". The multi-hop question may be decomposed into the single hop questions "which Argentinian footballer wears a shirt with the number 10?" and "which team do they play for". The single-hop answer triplets would therefore be, "<Messi, wears, number 10 shirt>, and "<Messi, plays for, Inter Miami CF>", respectively.

In a computing step s130, embeddings or vector representations may be computed for each of the decomposed questions. The embeddings may have the dimension 1536 (when using the text-embedding-ada-002 embedding model) or may have any other suitable dimension such as 768.

In a clustering step s140, the embeddings may be clustered using, for example, a k-means clustering algorithm. The cluster may have k centroids and groups together contextually and semantically similar in-domain questions based on the embedding.

In a modelling step s150, latent topic modelling may be performed on the clusters to extract a latent meaning for each embedding in the cluster. That is, each cluster may fall under a certain topic, or theme, or area. For example, a decomposed question may be "which band did Andrew Wood play in?". The clustering step may cluster embeddings related to people (or an activity, etc) around a single centroid. The latent topic modelling may then generalise the decomposed question into the latent topic, for example "person" or "music". The inventors used each centroid question along with 5 questions whose embeddings were closest to the centroids in the latent topic modelling method. As described in relation to Figure 6, the latent topic modelling may further include a step of schema induction (or this may be a separate step) An in-domain graph may be constructed with subject entities and object entities as nodes and relations as edges, or links, between nodes. The schema induction method may take each of the latent topics as an input and generate a graph schema based on the latent topics.

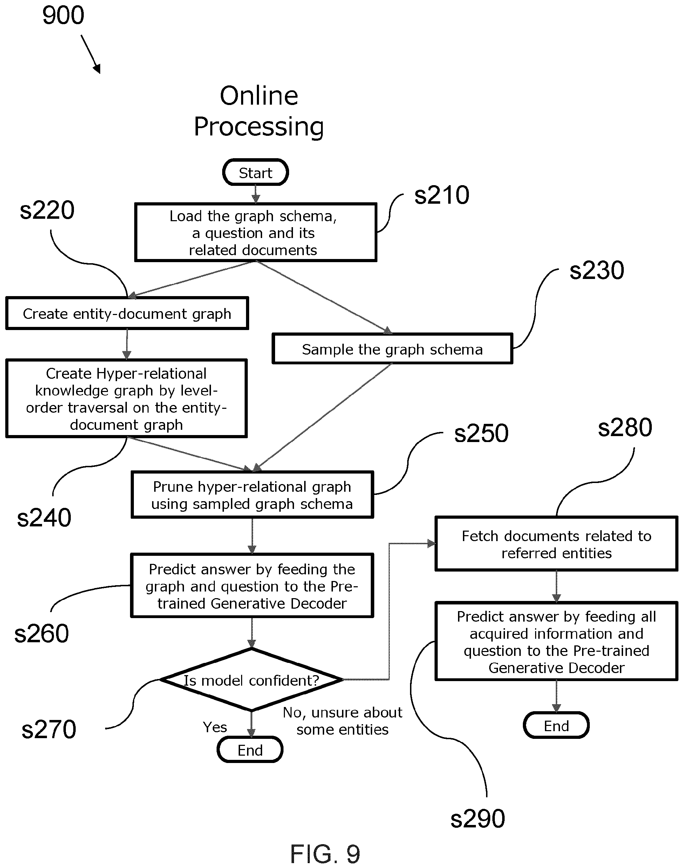

**Figure 9** is a flow chart 900 of a method for generating an answer to an input query. The method may be performed by the architecture described in relation to Figure 5. Generating the answer to the input question may be performed online. That is, a user may input a question into, for example, a mobile device or computer. The question may be sent wirelessly to a server storing the method disclosed herein. An answer may be generated at the server side and may be sent to the user device to view the generated answer.

In a loading step s210, the schema of in-domain questions described in relation to Figure 9 above may be loaded along with a question (or query) and input documents.

In a creating, or generating step, s220, an entity-document graph may be created from the input documents. Before creating the entity-document graphs, which may otherwise be referred to as a knowledge graph or knowledge schema, entities in the input documents may be extracted. Entities may be, for example, subjects and objects of sentences in the input documents. The entity document graph may be generated by linking each entity with the document it is extracted from.

In a sampling step s230, the schema of in-domain queries may be sampled with the input query to generate a query sampled schema. An embedding for the input query may be generated and compared with embeddings for the in-domain graph schema. For example, a similarity score based matching scheme (between query relations and triples in the schema) may be used with a threshold set for a cosine distance. For instance, the relation embeddings for the input query and in-domain graph schema may be compared by computing a cosine similarity score. The samples in the in-domain schema with a score above a threshold set for the cosine similarity score may be extracted as the query sampled schema.

In a creating step s240, a hyper-relational knowledge graph may be created using, for example, a level order traversal on the entity-document graph. The hyper-relational knowledge graph may be created by extracting, for each input query entity, a document title and relation to an input document entity from documents in the entity document graph. The entity-document graph may be traversed such that all nodes present in the same level are traversed completely before traversing the next level. With respect to a given input entity e, for every document node that is encountered in the graph, a hyper-relational knowledge quadruple is extracted from the document containing the entity. While a level order traversal (which may also be referred to as a breadth-first traversal) is described here, any suitable traversal may be used.

In a pruning step s250, the hyper-relational knowledge graph may be pruned, or sampled, using the query sampled schema. The hyper-relational knowledge graph may be sampled using a heuristic algorithm configured to retain query relevant information. A process for sampling the hyper-relational knowledge graph with the query sampled schema is described in relation to Figure 4 above.

In a predicting step s260, the pruned hyper-relational knowledge graph, which may be referred to as a query focused hyper-relational knowledge graph, may be input into a pretrained generative decoder along with the input query to generate an answer to the input query. The pretrained generative decoder may be, for example a known LLM such as GPT-3.5 and/or GPT-4. The pretrained generative decoder may tokenize the inputs, generate embeddings and decode the embeddings using known techniques.

The method may further comprise the following optional steps:
In an evaluating step s270, a confidence check may be performed on the predicted answer. As described above, the model may be prompted to determine if the input information is sufficient for generating an answer to the query.

In a retrieving, or fetching step, s280, if the model is not confident with the predicted answer, further information may be retrieved from the entity-document graph. For example, the whole entity-document graph may be retrieved for inputting into the PGD.

In a predicting step s290, an answer may be predicted for the input query by inputting the further retrieved information into the PGD along with the input query and query focused hyper-relational knowledge graph.

Thus, disclosed herein is a method for answering natural language multi-hop questions (those that require reasoning over multiple documents) without access to any labelled data from the dataset using Pre-trained Generative Decoders (LLMs) by building a hyper-relational knowledge graph from unstructured text. This graph may be constructed using a query-focused graph schema deduced in an automated and unsupervised manner. The schema may organize the unstructured text into a coherent structure, facilitating multi-step inference.

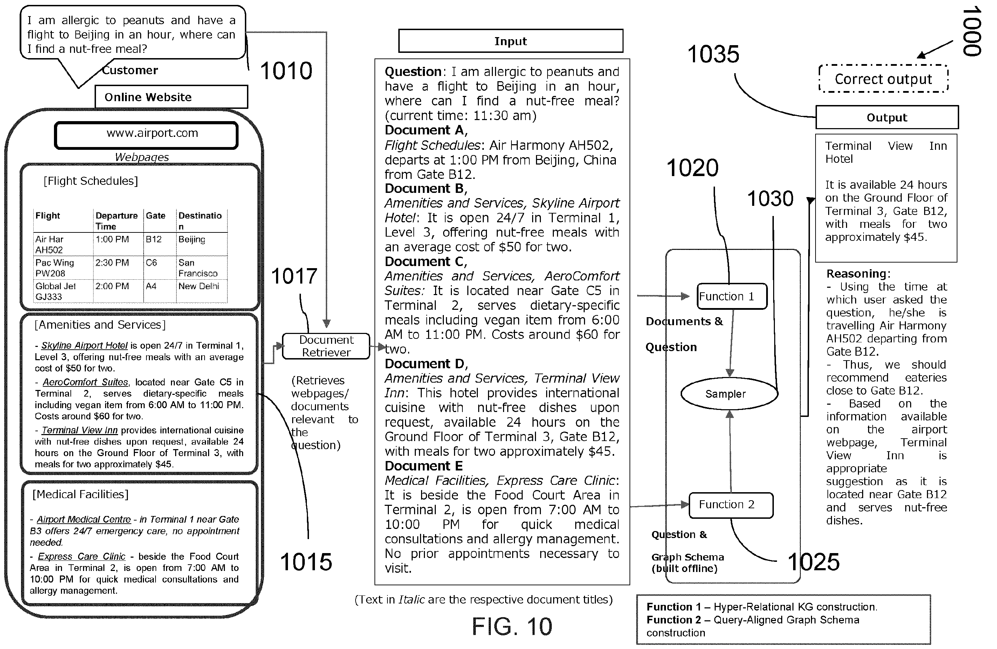

**Figure 10** is an example implementation 1000 of the method disclosed herein. In this example, the method is used to answer an input query 1010 in an airport domain. The input query is "I am allergic to peanuts and have a flight to Beijing in an hour, where can I find a nut-free meal?". The input query may be input into a document retriever 1017 along with input documents 1015. In this airport domain, the input documents may be taken from, for example an airport's website. As shown in the figure, the input documents may relate to flight schedules, amenities and services and medical facilities. The relevant documents (that is documents relevant to the query, i.e. supporting documents) may be retrieved by using a document retriever such as Colbertv2 (Santhanam, K., Khattab, O., Saad-Falcon, J., Potts, C. and Zaharia, M., 2021. Colbertv2: Effective and efficient retrieval via lightweight late interaction. arXiv preprint arXiv:2112.01488.). Additionally or alternatively, the documents may be stored in a dataset, for example an offline data set, with the supporting documents readily available with the queries.

The document retriever may compile the retrieved documents into input documents with a document heading (or label), i.e., document a, documents b, etc, a document title and information. For example, a format of the input document may be, Document A, *Flight Schedules:* Air Harmony AH502, departs at 1:00 PM from Beijing, China from Gate B12.

The method may proceed as described above to generate an answer to the input query. For example, the input query and input documents may be input into function 1 1020 to construct the hyper-relational knowledge graph. The input query and a schema of in-domain questions may be input into function 2 1025 to generate a query sampled schema. A sampler 1030 may be used to generate the query focused hyper-relational knowledge graph and the output of the sampler may be input into a PGD (not shown) along with the input query to generate an answer 1035.

As shown in the Figure, the output may further include a reasoning path. In this example, the reasoning path is as follows:
- Using the time at which user asked the question, he/she is travelling Air Harmony AH502 departing from Gate B 12.
- Thus, we should recommend eateries close to Gate B 12.
- Based on the information available on the airport webpage, Terminal View Inn is appropriate suggestion as it is located near Gate B 12 and serves nut-free dishes.

The above exemplary implementation of the method shows a real-world use case of the method disclosed herein. Further business impacts/ applications of the methods are as follows:
Helping customer connect their in-house data (PDFs, Excel sheets and other documents) and ask simple as well as multi-hop questions pertaining to various information and insight seeking questions. Some examples of questions are shown below.

Some real-world applications can be posed as a multi-hop question,

[Risk Analysis] A company wants to assess the risks of a bid. These assessments can be framed as multi-hop/complex Qs.

Example input question: Client abc requires Company X to work with xyz software, and w.r.t. profit margin the India GDC is best suited. Is there a risk associated with the allocation?

[Airport Help Desk] Company X wants to build AI companions/help-desk for its clients to answer simple and complex questions.

Example question: [Airport Client use case] I am allergic to peanuts and have a flight to Beijing in an hour, where can I find a nut-free meal?

The above examples may require multiple document support with multi-step reasoning to generate the desired answer for the clients of Company X.

[Medical diagnosis] The method may be configured to provide a medical diagnosis by automatically processing physiological measurements. For example, multiple physiological measurements may be provided in the input documents along with an input query regarding a diagnosis. The method may output a diagnosis as an answer by reasoning over the input documents.

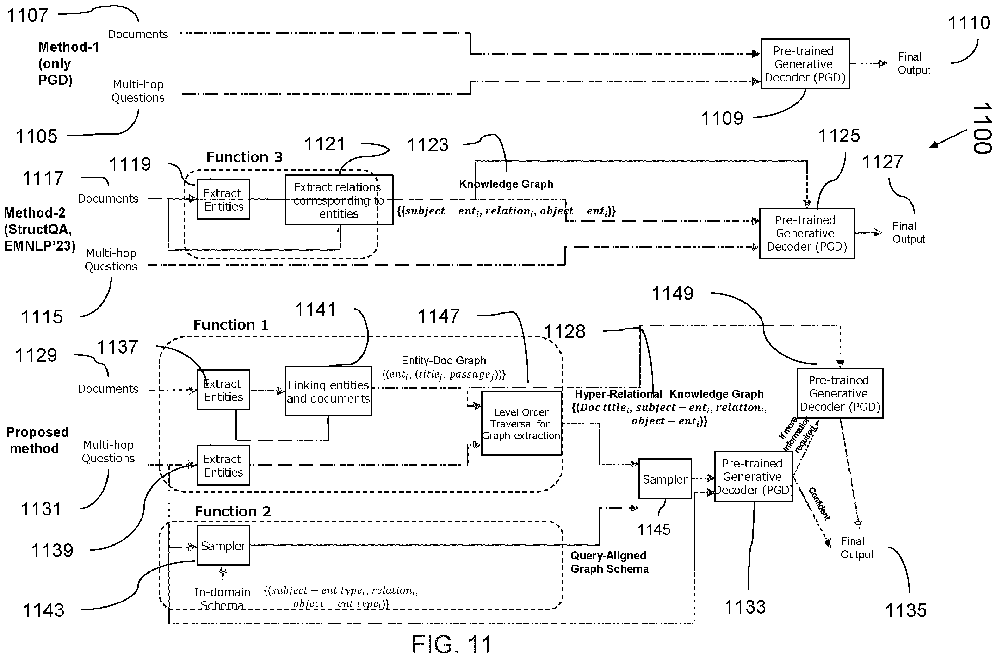

**Figure 11** shows low level diagrams 1100 for known methods and the method disclosed herein. The methods shown in the figure relate to training free (zero-shot) methods. For example, method 1 relates to the PGD only method discussed in relation to Figure 1. A multi-hop question 1105 is input, along with documents 1107, into a PGD 1109 to generate a final output 1110. Method 2 relates to, for example, methods using knowledge graphs, as discussed in relation to Figure 2. A multi-hop question 1115 is input, along with documents 1117. Entities are extracted from the documents (extract entities 1119) and relations corresponding to the entities are extracted (Extract relations corresponding to entities 1121). A knowledge graph 1123 is generated from the extracted entities and relations. The knowledge graph and multi-hop question are input into a PGD 1125 to generate a final output 1127 (e.g. an answer to the input question).

As discussed in relation to Figure 2, method 2, for example the StructQA method, creates an entity-relation graph (knowledge graph) from the text (i.e., the support documents) for zero-shot and few-shot multi-hop question answering. However, the inventors found that the method leads to incorrect and unreliable answers due to the knowledge graph containing conflicting information. In contrast, the method disclosed herein generates a hyper-relational knowledge graph 1128.

A knowledge graph (KG) is a structured representation of knowledge that incorporates named entities, and the relationships between them. {KG = (*e*_*s*, r, *e_o*) | *e_s, e_o* ∈ *E, r* ∈ R}, where E is the set of named entities, R is the set of relations.

A hyper-relational knowledge graph (or schema) (H) may be considered as an enriched form of a traditional KG. The hyper-relational knowledge graph may allow for the representation of multiple relationships between entities: {H = (*e*_*s*, r, *e_o,* a) | *e_s,* e_o ∈ *E, r* E R, a ∈ *A_dt*}*,* where E is the set of named entities, R is the set of relations and *A_dt* is the set of document titles that are additional attributes.

An example to illustrate the benefit of using Hyper-Relational KG over traditional KG is as follows. The following documents may be given as (input) documents 1129 for the proposed method:
1.Document-1 (Fruit): Apples are a staple in diets worldwide, enjoyed for their crisp texture and diverse flavours. Whether sliced in salads, pressed into refreshing juice, or baked into pies, the fruit's versatility and nutritional value make it a popular choice among consumers. Apple prices vary between $3-$5/Kg.
2. Document-2 (Company): In the tech industry, Apple Inc. stands out as a global giant, recognized for its innovative products and sleek designs. From iPhones to MacBooks, Apple has consistently shaped the consumer electronics landscape, setting trends and pushing the boundaries of technology. Apple releases phone whose prices vary between $150-$250.
3. Document-3 (Album): Fiona Apple's 1996 album, titled "Tidal," made a significant impact on the music scene. With its introspective lyrics and unique musical style, the album, simply named "Apple," is a testament to the artist's creativity and ability to connect with listeners on a profound level.

The methods known in the art may construct the KG Triples (subj ect entity, relation, object entity): [(Apple, is a, staple in diets), (Apple, recognized for, innovative products), (Fiona, album, Apple), (Apple, prices, $3-$5), (Apple, prices, $150-$250)]. When the above triples are input into a PGD, the PGD may link attributes between the company Apple and the fruit.

In contrast, the proposed method may generate the Hyper-Relational Kg quadruples, (subject entity, relation, object entity, document title): [(Apple, is, staple in diets, Fruit), (Apple, recognized for, innovative products, Company), (Fiona, album, Apple, Album), (Apple, prices, $3-$5, Fruit), (Apple, prices, $150-$250, Company)]
Given an input question (e.g., a multi-hop question 1131): What is the average cost of an Apple iPhone product?

The known method may `hallucinate' and output the factually incorrect answer: Answer with KG triples: $4

The related KG Triples may: (Apple, prices, $3-$5) , (Apple, prices, $150-$250). Thus, the PGD has become confused and linked the price of the fruit with the Apple company.

In contrast, the answer with Hyper-Relational KG quadruples may be $200. In this example, the PGD 1133 has not been confused by the multiple meanings of the word Apple and has output the correct answer (final output 1135). The related Hyper-Relational KG quadruples may be: (Apple, prices, $3-$5, Fruit), (Apple, prices, $150-$250, Company). The method resolves the confusion and ambiguities present in the input documents. The incorporation of the 'document title' attribute in Hyper-Relational KG triples facilitates conflict resolution by specifying the linkage of triples with their corresponding documents. As shown in the known methods KG triples may lead to confusion when the named entity 'Apple' is present in all three documents but signifies different meanings. The additional title attributes in the hyper-relational knowledge graph removes the ambiguity.

In the above example, the documents have the simple titles "fruit", "company" and "album". The titles may be the titles/headings of the document. The titles may alternatively be generated using, for example, metadata of a website from which the document has been extracted, or the document may be input into an LLM along with a prompt to generate a title of the document.

The inventors compared the output answers of known methods with the output answers of the method disclosed herein. Table 1 below shows a comparison of the results of the methods. The results show the accuracy of the answers using GPT-4 and GPT-3.5 as the pretrained generative decoder. The inventors used two question datasets, the HotpotQA (Yang, Z., Qi, P., Zhang, S., Bengio, Y., Cohen, W.W., Salakhutdinov, R. and Manning, C.D., 2018. HotpotQA: A dataset for diverse, explainable multi-hop question answering. arXiv preprint arXiv:1809.09600.)-1000 questions (mixture of 2-hop, 3-hop), and MuSiQue (Trivedi, H., Balasubramanian, N., Khot, T. and Sabharwal, A., 2022. MuSiQue: Multihop Questions via Single-hop Question Composition. Transactions of the Association for Computational Linguistics, 10, pp.539-554.) - 1000 questions (mixture of 2-hop, 3-hop, and 4-hop). The metrics used, which are known metrics in the domain of question answering, to evaluate accuracy of the methods were: Exact Match (EM), F1-Score, Precision (P), Recall (R) (with a higher score showing a better performance, where:
- Exact Match (EM): Measures if the predicted answer exactly matches the ground truth answer (all words are the same).
- Precision (P): it is the ratio of the number of shared words to the total number of words in the prediction.
- Recall (R): it is the ratio of the number of shared words to the total number of words in the ground truth.
- F1-Score: based on precision and recall

**Table 1**

| Methods | Hotpot QA | | | | Musique | | | |
|---|---|---|---|---|---|---|---|---|
| | EM | F1 | P | R | EM | F1 | P | R |
| GPT-4 (question) | 0.26 | 0.45 | 0.45 | 0.50 | 0.09 | 0.21 | 0.22 | 0.21 |
| GPT-4 (question +context) | 0.54 | 0.74 | 0.75 | 0.77 | 0.39 | 0.55 | 0.55 | 0.56 |
| StructQA + GPT-4 | 0.55 | 0.77 | 0.75 | **0.80** | 0.42 | 0.56 | 0.57 | 0.56 |
| Method disclosed herein + GPT-4 | **0.66** | **0.78** | **0.80** | 0.79 | **0.48** | **0.58** | **0.59** | **0.59** |
| | | | | | | | | |
| GPT-3.5 (question) | 0.23 | 0.37 | 0.38 | 0.40 | 0.06 | 0.15 | 0.17 | 0.15 |
| GPT-3.5 (question +context) | 0.47 | 0.65 | 0.66 | 0.68 | 0.24 | 0.36 | 0.36 | 0.37 |
| StructQA + GPT-3.5 | 0.48 | 0.64 | 0.62 | 0.67 | 0.23 | 0.37 | 0.37 | 0.37 |
| Method disclosed herein + GPT- 3.5 | **0.57** | **0.69** | **0.69** | **0.70** | **0.29** | **0.38** | **0.39** | **0.37** |

The inventors found that in all tests (expect for Recall for the hotpotQA) the proposed method outperformed the known methods when using GPT-4 as the PGD. Furthermore, when using GPT-3.5 as the PGD, the proposed method outperformed all the known methods.

As shown in Figure 11, the proposed method may use the modules/units: extract entities 1137, 1139; Linking entities and documents 1141, sampler 1143, 1145, Level Order Traversal for Graph extraction 1147, and pretrained generative decoder 1133, 1149. The units shown in Figure 11 may be the same or substantially the same as the units described in relation to Figure 5a and may therefore perform the same or substantially the same functions. The PGDs 1133 and 1149 may be the same as the LLMs, LLM1 505a and LLM2 505b respectively in Figure 5a.

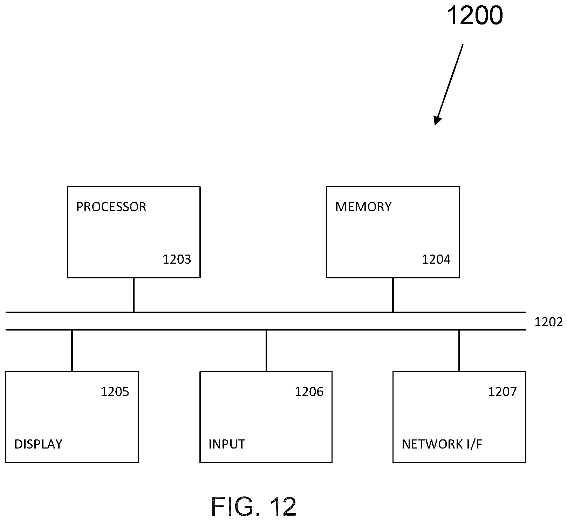

**Figure 12** is a block diagram of an information processing apparatus 1200 or a computing device 1200, such as a data storage server, which embodies the present invention, and which may be used to implement some or all of the operations of a method embodying the present invention, and perform some or all of the tasks of apparatus of an embodiment. The computing device 1200 may be used to implement any of the method steps described above, e.g. any of steps S10-S70 and/or S110 - S150 and/or S220-S290 for example.

The computing device 1200 comprises a processor 1203 and memory 1204. Optionally, the computing device also includes a network interface 1207 for communication with other such computing devices, for example with other computing devices of invention embodiments. Optionally, the computing device also includes one or more input mechanisms such as keyboard and mouse 1206, and a display unit such as one or more monitors 1205. These elements may facilitate user interaction. The components are connectable to one another via a bus 1202.

The memory 1204 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, for example any of steps S10-S70. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 1203 is configured to control the computing device and execute processing operations, for example executing computer program code stored in the memory 1204 to implement any of the method steps described herein. The memory 1204 stores data being read and written by the processor 1203 and may store at least one entity extractor, embedding generator, pretrained generative decoder, LLM, sampler, and/or any schema described above, and/or programs for executing any of the method steps described above. These entities may be in the form of code blocks which are called when required and executed in a processor.

As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 1203 may be considered to comprise any of the units, or modules, described above. Any operations described as being implemented by a unit may be implemented as a method by a computer and e.g. by the processor 1203.

The LLMs used in the method described herein where proprietary or closed source LLMs run on external servers. For implementing the method using open-weight LLMs, such as mixtral 7x8b models (https://mistral.ai/news/mixtral-of-experts/), the method may be run on a single A100 Nvidia GPU with 80 GB VRAM, with Intel(R) Xeon(R) Silver 4314 CPU @ 2.40GHz CPU.

The display unit 1205 may display a representation of data stored and/or generated by the computing device, such as a predicted answer to an input question. The out may be shown as GUI windows and/or interactive representations enabling a user to interact with the apparatus 1200 by e.g. selection interaction, input text boxes, and/or any other output described above, and may also display a cursor and dialog boxes and screens enabling interaction between a user and the programs and data stored on the computing device. The input mechanisms 1206 may enable a user to input data and instructions to the computing device, such as enabling a user to input any user input described above. For example, the display unit may display a GUI including a User panel, or input space, for the user to interact. The user may input a query. The user may interact with the GUI and display to generate and view an answer to the input query.

The network interface (network I/F) 1207 may be connected to a network, such as the Internet, and is connectable to other such computing devices via the network. The network I/F 1207 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 1200 such as that illustrated in Figure 12. Such a computing device need not have every component illustrated in Figure 12 and may be composed of a subset of those components. For example, the apparatus 1200 may comprise the processor 1203 and the memory 1204 connected to the processor 1203. Or the apparatus 1200 may comprise the processor 1203, the memory 1204 connected to the processor 1203, and the display 1205. For example, the functions and/or architecture described in relation to Figure 5a may be stored in the memory and/or the method described in relation to Figure 4 may be stored in the memory. The processor may be configured to perform the method stored in the memory using, for example, the functions and/or architecture stored in the memory. A method embodying the present invention may be carried out by a single computing device in communication with one or more data storage servers via a network. The computing device may be a data storage itself storing at least a portion of the data. The functions and/or architecture and/or method may be stored in on the one or more data storage servers and the processor in the computing device may be configured to carry out the method steps.

A method embodying the present invention may be carried out by a plurality of computing devices operating in cooperation with one another. One or more of the plurality of computing devices may be a data storage server storing at least a portion of the data. For example, the pretrained generative decoder and/or in-domain schema may be stored on a separate server from other units or modules.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

The system described herein was developed in the python programming language using the following libraries: python-dotenv, openai, langchain, pydantic, transformers, spacy, numpy, scipy, torch, and matplotlib. Of course, any suitable programming language and libraries may be used.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

## Claims

1. A computer-implemented method of generating an answer from an input query and input documents, comprising:
extracting input query entities from the input query and input document entities from the input documents;
sampling a schema of in-domain queries with the input query to generate a query sampled schema;
generating an entity-document graph from the input documents and input document entities;
generating a hyper-relational knowledge graph by extracting, for each input query entity, a document title and relation to an input document entity of the input document entities from the input documents in the entity-document graph;
sampling the hyper-relational knowledge graph with the query sampled schema to generate a query focused hyper-relational knowledge graph;
predicting an answer to the input query by inputting the query focused hyper-relational knowledge graph and input query into a pretrained neural network; and
outputting the answer.

2. The method of any preceding claim, wherein the entity-document graph links each input document entity with the input documents containing the input document entity and wherein the document title and relation to the input document entity are from the same input document.

3. The method of any preceding claim, wherein the hyper-relational knowledge graph is generated using a level order traversal of the entity-document graph starting from an input query entity.

4. The method according to any preceding claim, wherein the hyper-relational knowledge graph is sampled with the query sampled schema by:
generating query sampled schema embeddings for relations between entities in the query sampled schema;
generating hyper-relational knowledge graph embeddings for the relations between the input query entities and input document entities in the hyper-relational knowledge graph;
comparing the query sampled schema embeddings and hyper-relational knowledge graph embeddings; and
extracting the relations and corresponding input query entities and input document entities in the hyper-relational knowledge graph which meet a similarity score to generate the query focused hyper-relational knowledge graph.

5. The method according to claim 4, wherein the query sampled schema embeddings and hyper-relational knowledge graph embeddings are compared using a cosine similarity score and optionally wherein a hyperparameter sets the number of the relations and corresponding input query entities and input document entities to extract.

6. The method according to any preceding claim, wherein the schema of in-domain queries is sampled with the input query to generate the query sampled schema by:
extracting input query relations between input query entities from the input query; generating a relation embedding for each of the input query relations and in-domain relation embeddings for each relation in the schema of in-domain queries;
computing a query sampled similarity score between each relation embedding and each in-domain relation embedding; and
generating the query sampled schema by removing the relations in the schema of in-domain queries and entities corresponding to the relations in the schema of in-domain queries which do not meet a threshold of the query sampled similarity score.

7. The method according to any preceding claim, wherein the schema of in-domain queries is generated by;
loading in-domain queries;
decomposing the in-domain queries into single-hop questions; generating single hop question embeddings for each single-hop question;
clustering the single-hop question embeddings into clusters;
using latent topic modelling to categorise each cluster into a question category; and
using schema induction to generate the schema of in-domain queries from the question categories.

8. The method according to claim 7, wherein a single-hop question is a question which is answered with the information in a single triplet, a triplet taking the form <subject, relation, object>, a subject being a subject of a sentence, an object being the object of the sentence and a relation being the relation between the subject and object in the sentence.

9. The method according to any of claims 7 to 8, wherein the clustering comprises k-means clustering.

10. The method according to any of claims 7 to 9, wherein generating the schema of in-domain queries using schema induction comprises:
instructing a large language model, LLM, to generate the schema of in-domain queries using entity types, the LLM generating relations for the entity types.

11. The method according to any preceding claim wherein the pretrained neural network is a pretrained generative decoder, PGD, and/or large language model.

12. The method according to any preceding claim, wherein a confidence of the predicted answer is determined and, if it is determined that information in the query focused hyper-relational knowledge graph is insufficient for answering the input query, the answer is predicted by further inputting the entity-document graph into the pretrained neural network.

13. The method according to any preceding claim, wherein the hyper-relational knowledge graph comprises the quadruples <document title, input query entity, relation, input document entity> for each input query entity.

14. A computer program which, when run on a computer, causes the computer to carry out a method of generating an answer from an input query and input documents comprising:
extracting input query entities from the input query and input document entities from the input documents;
sampling a schema of in-domain queries with the input query to generate a query sampled schema;
generating an entity-document graph from the input documents and input document entities;
generating a hyper-relational knowledge graph by extracting, for each input query entity, a document title and relation to an input document entity of the input document entities from the input documents in the entity-document graph;
sampling the hyper-relational knowledge graph with the query sampled schema to generate a query focused hyper-relational knowledge graph;
predicting an answer to the input query by inputting the query focused hyper-relational knowledge graph and input query into a pretrained neural network; and
outputting the answer.

15. An information processing apparatus for generating an answer from an input query and input documents comprising a memory and a processor connected to the memory, wherein the processor is configured to:
extract input query entities from the input query and input document entities from the input documents;
sample a schema of in-domain queries with the input query to generate a query sampled schema;
generate an entity-document graph from the input documents and input document entities;
generate a hyper-relational knowledge graph by extracting, for each input query entity, a document title and relation to an input document entity of the input document entities from the input documents in the entity-document graph;
sample the hyper-relational knowledge graph with the query sampled schema to generate a query focused hyper-relational knowledge graph;
predict an answer to the input query by inputting the query focused hyper-relational knowledge graph and input query into a pretrained neural network;
output the answer.
